Europäisches Patentamt

European Patent Office

Office européen des brevets

(19)

(11) Veröffentlichungsnummer: **0 417 661 A1**

# (12) EUROPÄISCHE PATENTANMELDUNG

(21) Anmeldenummer: 90117269.2

(22) Anmeldetag: 07.09.90

(51) Int. Cl.⁵: **G01C 9/06, G01C 9/36**

(30) Priorität: 11.09.89 DE 3930228

(43) Veröffentlichungstag der Anmeldung:
**20.03.91 Patentblatt 91/12**

(84) Benannte Vertragsstaaten:
**CH DE FR GB IT LI**

(71) Anmelder: **Bodenseewerk Gerätetechnik GmbH**
**Alte Nussdorfer Strasse 15 Postfach 1120**
**W-7770 Überlingen/Bodensee(DE)**

(72) Erfinder: **Froning, Edilbert**
**Bodanstrasse 23**
**W-7772 Oberuhldingen(DE)**

(74) Vertreter: **Weisse, Jürgen, Dipl.-Phys. et al**
**Patentanwälte Dipl.-Phys. Jürgen Weisse**
**Dipl.-Chem. Dr. Rudolf Wolgast Bökenbusch**
**41 Postfach 11 03 86**
**W-5620 Velbert 11 Langenberg(DE)**

(54) **Lotsensor.**

(57) Ein Lotsensor enthält einen Behälter, in welchem eine absorbierende Flüssigkeit (72) eingeschlossen ist. In der absorbierenden Flüssigkeit ist eine Luftblase (70) gebildet, die sich bei Abweichung des Behälters von einer Lotanzeigestellung verlagert. Auf gegenüberliegenden Seiten des Behälters sind eine Lichtquelle (76) und ein fotoelektrischer Detektor (80) angebracht. Diese bilden eine Lichtschranke, die auf Auswanderung der Luftblase aus der Lotanzeigestellung anspricht. Mindest ein Mantelteil (64,66) des Behälters ist flexibel ausgebildet und dient als Druckausgleichsmittel.

Fig.2

EP 0 417 661 A1

Die Erfindung betrifft einen Lotsensor mit einem Behälter, der mit einer lichtabsorbierenden Flüssigkeit und einer darin eingeschlossenen Luftblase gefüllt ist, die sich bei Abweichung des Behälters von seiner Lotanzeigestellung verlagert, und mit auf gegenüberliegenden Seiten des Behälters angebrachten angebrachten Lichtschrankenmitteln, welche auf Verlagerung der Luftblase ansprechen.

Für die fehlerfreie Funktion von nordsuchenden Kreiselgeräten ist eine lotrechte Aufstellung des Gerätes erforderlich. Auch andere Geräte benötigen zur fehlerfreien Funktion eine lotrechte Aufstellung. Es ist bekannt, die lotrechte Ausrichtung eines Geräts durch ein quecksilbergefülltes Gefäß zu bewirken, wobei ein Kontakt hergestellt wird, wenn das Gefäß von einer Lotstellung abweicht. Zwischen der Oberfläche des Quecksilbers und dem bei der Lotstellung nicht in das Quecksilber eintauchenden Anschluss muss eine endliche Trennstrecke vorhanden sein. Quecksilberschalter sprechen daher nur auf grobe Abweichungen von der Lotstellung in der Grössenordnung von einigen Grad an. Solche Quecksilberschalter können dann ein Signal liefern, welches entweder die Abweichung von der Lotstellung signalisiert oder eine automatische Ausrichtung bewirkt.

Ein aus der US-A-4 154 000 bekanntes Gerät dieser Art zur Fernerfassung der Horizontalsausrichtung enthält einen mit einer transparenten Flüssigkeit gefüllten, zylindrischen Behälter mit einer Luftblase. Auf gegenüberliegenden Seiten des Behälters sind mehrere Lichtquellen und Lichtsensoren in der Weise angeordnet, dass das von den Lichtquellen ausgehende Licht durch die Lichtbrechung des flüssigkeitsgefüllten Behälters, also in Abwesenheit der Luftblase, auf die Lichtsensoren fällt. Die Anordnung ist so getroffen, dass die Null-Lage der Luftblase und deren Abweichung aus der Null-Lage, sowie die Richtung der Abweichung angezeigt werden, um beispielsweise die Horizontalstellung eines Anhängers oder Wohnwagens zu bewirken.

Die US-A-4 110 609 betrifft eine Vorrichtung zur Erfassung von Kippgrenzen. Diese Vorrichtung enthält u.a. ein im Schnitt rechtwinkliges Gefäss, das mit einer lichtundurchlässigen Flüssigkeit gefüllt ist und eine Luftblase enthält. Nahe den Enden sind auf gegenüberliegenden Seiten des Behälters Lichtquellen und Lichtsensoren angeordnet. Die Lichtsensoren erzeugen ein Ausgangssignal bei Anwesenheit der Luftblase, die bei Auslenkungen des Behälters aus der Horizontallage zu den entsprechenden Enden des Behälters wandert.

Die US-A-3 813 556 betrifft ebenfalls eine Vorrichtung zur Erfassung der Kippgrenze zum Beispiel in Verbindung mit Flugzeuglandesystemen. Diese Vorrichtung enthält u.a. einen gekrümmten, im Querschnitt rechteckigen Behälter, der mit einer lichtundurchlässigen Flüssigkeit gefüllt ist und eine Luftblase enthält. In der Null-Lage der Luftblase sind eine Lichtquelle und ein Lichtsensor auf gegenüberliegenden Seiten des Behälters angeordnet. Zusätzlich können seitlich davon in einem Abstand, der geringer ist als die Breite der Luftblase, eine weitere Lichtquelle und ein weiterer Lichtsensor vorgesehen werden, um die Richtung einer Auslenkung des Behälters aus der Horizontallage zu bestimmen.

Aus der US-A-4 517 750 sind ein Verfahren und eine Vorrichtung zur Anzeige des Lots bekannt, insbesondere bei einem physikalischen Pendel, das in einem flüssigkeitsgefüllten Gehäuse einen drehbar gelagerten Rotor enthält. Das Gehäuse ist mit einem Balgen versehen, durch den temperaturbedingte Änderungen des Flüssigkeitsvolumens kompensiert werden. Es ist darin ein vollständig mit Flüssigkeit gefüllter Behälter vorgesehen, bei dem Volumausgleichsmittel innerhalb des Behälters angeordnet sind, um den Druck im Inneren des Behälters bei Temperaturänderungen konstant zu halten.

Bei den vorgenannten Lotsensoren ist die Flüssigkeit mit der Luftblase dicht in den Behälter eingeschlossen, sodass die Luftblase bei Temperaturänderungen als solche, aber auch wegen der damit verbundenen Volumänderungen der Flüssigkeit Formänderungen unterliegt. So können bei Temperaturerhöhung Volumverkleinerungen der Luftblase in einem solchen Umfang eintreten, dass dadurch am Empfänger der Lichtschrankenmittel eine Intensitätsänderung des auffallenden Lichts bewirkt und damit eine Auswanderung der Luftblase und Abweichung des Behälters von der Lotanzeigestellung vorgetäuscht wird.

Dementsprechend besteht die Aufgabe der Erfindung darin, einen Lotsensor der vorgenannten Art zu schaffen, der gegen Temperatureinflüsse im wesentlichen unempfindlich ist.

Erfindungsgemäss wird diese Aufgabe bei einem Lotsensor der eingangs genannten Art dadurch gelöst, dass der Behälter zwei gegenüberliegende, starre, durchsichtige Stirnplatten aufweist und mindestens einen als Druckausgleichsmittel dienenden, flexiblen Mantelteil.

Der Lotsensor nach der Erfindung arbeitet nach dem Prinzip einer Libelle. Er kann daher sehr empfindlich ausgebildet werden. Diese Empfindlichkeit kann durch die Formgebung der Innenwandung des Behälters bestimmt werden. Die Innenwandung des Behälters wird zweckmässig auf der Oberseite so geformt, dass in der Lotanzeigestellung die Luftblase gerade in einer definierten Stellung gehalten wird, dass aber schon bei geringfügigen Abweichungen von dieser Lotanzeigestellung eine seitliche Auswanderung der Luftblase erfolgt. Die Auswanderung der Luftblase wird fotoelektrisch durch

Lichtschrankenmittel erfasst. Die Lichtschrankenmittel sprechen auf den Intensitätssprung an, der auftritt, wenn die Luftblase aus dem Gesichtsfeld der Lichtschrankenmittel herauswandert und statt dessen zwischen Sender und Empfänger der Lichtschrankenmittel nur noch die absorbierende Flüssigkeit vorhanden ist.

Der wenigstens eine flexible Mantelteil des Behälters folgt den Volumänderungen der Flüssigkeit unter dem Einfluss von Temperaturänderungen, sodass diese Volumänderung ohne Auswirkung auf das Volumen der Luftblase und damit auf die Anzeige der Lotstellung bleiben. Dies ist von besonderer Bedeutung für die fehlerreie Funktion von nordsuchenden Kreiselgeräten.

Ausgestaltungen der Erfindung sind Gegenstand der Patentansprüche 2 bis 5.

Ausführungsbeispiele der Erfindung sind nachstehend unter Bezugnahme auf die zugehörigen Zeichnungen näher erläutert:

Fig. 1 zeigt ein erstes Ausführungsbeispiel des erfindungsgemässen Lotsensors mit Druckausgleich.

Fig. 2 zeigt ein zweites Ausführungsbeispiel des erfindungsgemässen Lotsendors mit Druckausgleich.

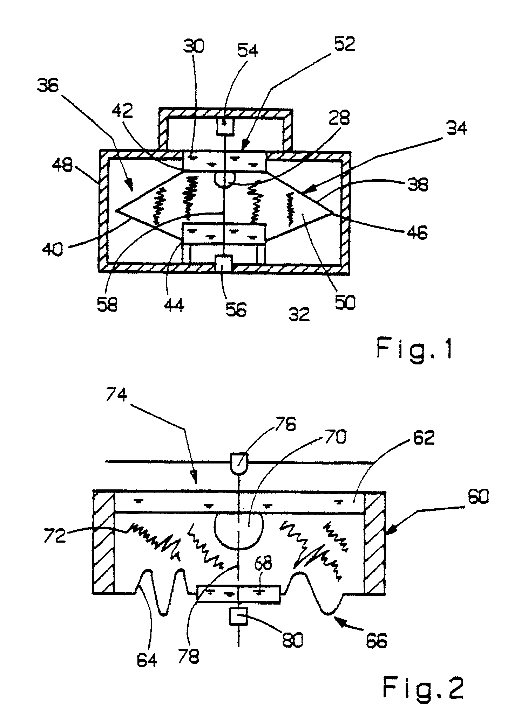

In Fig. 1 ist ein Lotsensor dargestellt, bei welchem eine Luftblase 28 auf einer Seite an eine starre, durchsichtige Stirnplatte 3o angrenzt, die eine Stirnfläche eines Behälters 34 bildet. Die gegenüberliegende Stirnfläche des Behälters 34 wird von einer ebenfalls starren, durchsichtigen Stirnplatte 32 gebildet. Die starren, durchsichtigen Stirnplatten 30 und 32 können zum Beispiel Glasplatten sein. Die beiden starren Stirnplatten 3o und 32 sind über flexible Mantelteile 36 miteinander verbunden. Diese flexiblen Mantelteile dienen als Druckausgleichsmittel. Die Mantelteile 36 sind bei der Ausführung nach Fig. 1 von Ringmembranen 38 und 4o gebildet. Die Ringmembran 38 ist an ihrem Innenrand 42 mit dem Rand der Stirnplatte 3o verbunden. Die Ringmembran 4o ist an ihrem Innenrand 44 mit dem Rand der Stirnplatte 32 verbunden. Die Aussenränder der Ringmembranen 38 und 4o sind längs einer Verbindungnaht 46 miteinander verbunden. Die Ringmembranen 38 und 4o sind als Metallmembranen ausgebildet.

Die obere Stirnplatte 3o sitzt in einem Sensorgehäuse 48. Die untere Stirnplatte 32 ist in dem Sensorgehäuse 48 abgestützt. Der Behälter 34 bestimmt einen Innenraum 5o, der bis auf die Luftblase 28 mit einer absorbierenden Flüssigkeit gefüllt ist.

In dem Sensorgehäuse 48 sitzen beiderseits der Stirnplatten 3o und 32 Lichtschrankenmittel 52. Die Lichtschrankenmittel 52 bestehen aus einer Leuchtdiode 54 und einem fotoelektrischen Detektor 56. Die Lichtschrankenmittel 52 schicken einen Lichtstrahl 58 zentral durch die Kammer 5o.

Die Innenfläche der Stirnplatte 3o kann sehr schwach konkav geformt sein, sodass die Luftblase 28 in der Lotstellung des Sensorgehäuses 48, in der der Lichtstrahl 58 genau vertikal verläuft, die dargestellte Mittelstellung einnimmt. Wenn der Lotsensor aus der dargestellten Lotanzeigestellung heraus um einen kleinen Winkel geneigt wird, wandert die Luftblase 28 zur Seite hin aus. Das Signal des Fotodetektors 56 wird dadurch sprunghaft vermindert. Der Fotodetektor 56 ist so abgeglichen, dass der Sensor in der dargestellten Lage, in welcher der Lichtstrahl 58 durch die Luftblase 28 hindurchtritt und dadurch durch die absorbierende Flüssigkeit weniger geschwächt wird, kein Ausgangssignal abgibt. Ein solches Ausgangssignal tritt dagegen auf, wenn die Luftblase 28 zur Seite auswandert und der Lichtstrahl 58 dadurch einer stärkeren Absorption durch die absorbierende Flüssigkeit unterworfen wird.

Eine solche stärkere Absorption könnte auch dann auftreten, wenn sich der Druck in dem Behälter 34 infolge einer Temperaturerhöhung stark erhöht und dadurch die Luftblase 28 komprimiert und verkleinert wird. Aus diesem Grunde ist der Behälter 34 bei der hier beschriebenen Ausführung des Lotsensors mit den flexiblen Mantelteilen versehen, so dass der Druck der Flüssigkeit bei einer Temperaturerhöhung sich ausgleichen kann und im wesentlichen auf Atmosphärendruck bleibt.

Bei der Ausführung nach Fig. 2 ist der Behälter 6o dosenartig ausgebildet, wobei eine Stirnfläche von einer ersten starren, durchsichtigen Platte 62, z.B. einer Glasplatte, gebildet ist. Die gegenüberliegende Stirnfläche des Behälters 6o enthält eine flexible, als metallische Wellmembran mit konzentrischen Rillen 64 ausgebildete Ringmembran 66. In dieser Ringmembran 66 ist eine zweite starre, durchsichtige Platte 68 zentral gehalten. Mit 7o ist eine Luftblase bezeichnet, die in einer absorbierenden Flüssigkeit in einer Kammer 72 in dem Behälter 6o gebildet ist. Die Lage der Luftblase wird von Lichtschrankenmitteln 74 überwacht. Die Lichtschrankenmittel 74 enthalten eine Leuchtdiode 76, welche ein Lichtbündel 78 längs der Achse des dosenförmigen Behälters 6o auf einen fotoelektrischen Detektor 8o leitet. Hier wirkt die Ringmembrane 66 als Druckausgleichsmittel. Im übrigen arbeitet der Lotsensor von Fig. 2 in gleicher Weise wie der Lotsensor von Fig. 1.

Die Druckausgleichsmittel können auch von einem in dem Behälter angeordneten elastischen Hohlkörper gebildet sein, dessen Innenraum mit der Atmosphäre verbunden ist.

**Ansprüche**

1. Lotsensor mit einem Behälter (34, 6o), der mit einer lichtabsorbierenden Flüssigkeit und einer darin eingeschlossenen Luftblase (28, 7o) gefüllt ist, die sich bei Abweichung des Behälters (34, 6o) von seiner Lotanzeigestellung verlagert, und mit auf gegenüberliegenden Seiten des Behälters (34, 6o) angebrachten Lichtschrankenmitteln (52, 74), welche auf Verlagerung der Luftblase (28, 7o) ansprechen, **dadurch gekennzeichnet, dass** der Behälter (34, 7o) zwei gegenüberliegende, starre, durchsichtige Stirnplatten (3o, 32; 62, 68) aufweist und mindestens einen als Druckausgleichsmittel dienenden, flexiblen Mantelteil (38, 4o; 66).

2. Lotsensor nach Anspruch 1, **dadurch gekennzeichnet, dass,** Sender (54, 76) und Empfänger (56, 8o) der Lichtschrankenmittel (52, 74) an den Aussenseiten der durchsichtigen, starren Stirnplatten (3o, 32; 62, 68) angeordnet sind.

3. Lotsensor nach Anspruch 1 oder 2, **dadurch gekennzeichnet, dass** zwei flexible Mantelteile (38, 4o) vorgesehen und von Ringmembranen gebildet sind, die an ihren Innenrändern (42, 44) mit dem Rand der jeweiligen Stirnplatte (3o, 32) und an ihren Aussenrändern miteinander verbunden sind.

4. Lotsensor nach Anspruch 3, **dadurch gekennzeichnet, dass** die Ringmembranen Metallmembranen sind.

5. Lotsensor nach Anspruch 1 oder 2, **dadurch gekennzeichnet, dass** eine Stirnfläche des Behälters (6o) von einer ersten starren, durchsichtigen Stirnplatte (62) gebildet ist, und dass die gegenüberliegende Stirnfläche des Behälters (6o) von einem flexiblen Mantelteil (66) in Form einer metallischen, ringförmigen Wellmembran mit konzentrischen Rillen und einer zentral an dieser gehaltenen, starren, durchsichtigen zweiten Platte (68) gebildet ist.

Fig. 1

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | PATENT ABSTRACTS OF JAPAN, vol. 10, no. 127 (P-455)[2184], 13. Mai 1986; & JP-A-60 252 215 (SABUROU SUGAWARA) 12-12-1985 — — — | 1,2,5 | G 01 C 9/06 G 01 C 9/36 |
| Y | CH-A-5 828 74   (WILLERS AG, BURG AG) * Patentanspruch; Figur * — — — | 1,2 | |
| Y | CH-A-2 126 60   (ZEISS) * Seite 2, Spalte 1, Zeilen 22-25; Spalte 2, Zeilen 30-33; Figur 1 * — — — | 5 | |
| A | US-A-3 813 556   (BEER) * Zusammenfassung; Figur 2 * — — — — — | 1 | |

| | | | RECHERCHIERTE SACHGEBIETE (Int. Cl.5) |
|---|---|---|---|
| | | | G 01 C |

Der vorliegende Recherchenbericht wurde für alle Patentansprüche erstellt

| Recherchenort | Abschlußdatum der Recherche | Prüfer |
|---|---|---|
| Den Haag | 20 November 90 | HOEKSTRA F.R. |